# EUROPÄISCHE PATENTSCHRIFT

(11) **EP 3 373 778 B1**
(45) Veröffentlichungstag und Bekanntmachung des Hinweises auf die Patenterteilung: **01.01.2020**
(21) Anmeldenummer: 16790985.2
(22) Anmeldetag: 02.11.2016
(51) Int. Cl.: A47J 31/20

(54) **AUFFANGBEHÄLTER ZUM AUFFANGEN VON UNLÖSLICHEM MATERIAL, WELCHES BEI DER ZUBEREITUNG VON GETRÄNKEN VERWENDET WIRD, SOWIE AUFGUSSVORRICHTUNG MIT EINEM DERARTIGEN AUFFANGBEHÄLTER**
COLLECTING CONTAINER FOR COLLECTING INSOLUBLE MATERIAL USED DURING THE PREPARATION OF BEVERAGES, AND INFUSION DEVICE COMPRISING SUCH A COLLECTING CONTAINER
RÉCIPIENT COLLECTEUR POUR LA COLLECTE DE LA MATIÈRE INSOLUBLE UTILISÉE LORS DE LA PRÉPARATION DE BOISSONS ET DISPOSITIF D'INFUSION DOTÉ D'UN TEL RÉCIPIENT COLLECTEUR

(30) Priorität: 11.11.2015 DE 102015119406
(43) Veröffentlichungstag der Anmeldung: 19.09.2018
(73) Patentinhaber: PI-Design AG, 6234 Triengen (CH)
(72) Erfinder: BODUM, Jørgen, 6045 Meggen (CH)
(74) Vertreter: Westphal, Mussgnug & Partner Patentanwälte mbB
(86) Internationale Anmeldenummer: PCT/EP2016/076423
(87) Internationale Veröffentlichungsnummer: WO 2017/080885

(56) Entgegenhaltungen:
- EP-A1- 2 798 985
- WO-A1-02/067739
- FR-A- 1 557 460

## Beschreibung

Die vorliegende Erfindung betrifft einen Auffangbehälter zum Auffangen von unlöslichem Material, welches bei der Zubereitung von Getränken mittels einer Aufgussvorrichtung verwendet wird. Weiterhin betrifft die Erfindung eine Aufgussvorrichtung mit einem derartigen Auffangbehälter.

Aufgussvorrichtungen zum Zubereiten von Getränken werden auch als French Press oder Pressfilter bezeichnet. Die Aufgussvorrichtung weist dabei einen Container mit einem offenen Ende und einem geschlossenen Ende auf, wobei der Container üblicherweise eine zylindrische oder prismatische Form aufweist. Zum Zubereiten von Kaffee oder Tee wird die gewünschte Menge an unlöslichem Material wie Kaffeepulver oder Teeblätter in den Container gefüllt und dann mit heißem Wasser übergossen. Anschließend lässt man das Kaffeepulver oder die Teeblätter für eine bestimmte Zeit ziehen. Danach wird eine Kolben-Filteranordnung in den Container eingebracht, welche eine Kolbenstange und einen an der Kolbenstange befestigten Pressfilter umfasst. Üblicherweise ist die Kolbenstange in einem Deckel, der auf das offene Ende aufgesteckt und mit dem der Container verschlossen werden kann, verschiebbar gelagert. Der Pressfilter weist eine dem Querschnitt des Containers entsprechende Form auf, so dass der Pressfilter seitlich mit dem Container abschließt. Der Pressfilter wird mittels der Kolbenstange zum geschlossenen Ende hin gedrückt. Als Folge hiervon wird das extrahierte Kaffeepulver oder die extrahierten Teeblätter vom Kaffee bzw. vom Tee getrennt und im Bereich des geschlossenen Endes komprimiert. Der so gefilterte Kaffee oder Tee kann nun getrunken werden. Nachdem der Kaffee oder Tee vollständig konsumiert worden ist, wird die Kolben-Filteranordnung aus dem Container gezogen und das komprimierte Kaffeepulver oder die komprimierten Teeblätter aus dem Container entfernt.

Je nachdem, welche Menge von Kaffeepulver oder Teeblättern verwendet worden sind, können diese ziemlich stark komprimiert sein, so dass ihre Entfernung aus dem Container und die Reinigung des Containers ziemlich mühsam sein können. In vielen Fällen werden das Kaffeepulver und die Teeblätter unter Verwendung von Wasser entfernt und anschließend in den Abfluss gegeben, was zu einer Verstopfung der Abwasserrohre führen kann.

Um diesem Nachteil zu begegnen, sind Auffangbehälter vorgeschlagen worden. Die DE 34 32 289 C1, die WO 02/067739 A1, die EP 2 798 985 A1 und die WO 96/035360 A1 offenbaren Auffangbehälter bzw. Auffangplatten, welche in den Container eingebracht werden, bevor das unlösliche Material und das Wasser in den Container gefüllt werden. Wenn der Pressfilter der Kolben-Filteranordnung zum geschlossenen Ende des Containers gedrückt wird, sammelt sich das unlösliche Material im Auffangbehälter. Darüber hinaus wird die Kolben-Filteranordnung beim Herunterdrücken des Pressfilters mit dem Auffangbehälter gekuppelt, so dass der Auffangbehälter zusammen mit der Kolben-Filteranordnung aus dem Container herausgezogen werden kann. Die Reinigung des Containers wird hierdurch deutlich vereinfacht. Zudem kann der Auffangbehälter über einem Mülleimer geleert werden, so dass die in den Abfluss gegebene Menge des unlöslichen Materials deutlich reduziert werden kann und Verstopfungen vermieden werden.

Bei den Aufgussvorrichtungen, die in der WO 96/035360 A1 und der DE 34 32 289 C1 beschrieben sind, wird die Kolben-Filteranordnung dadurch mit dem Auffangbehälter gekuppelt, dass der Pressfilter in den Auffangbehälter eingebracht wird. Dabei wird die Kupplung in der WO 96/035360 A1 durch einen Reibschluss zwischen dem Pressfilter und dem Auffangbehälter bewirkt, während in der DE 34 32 289 C1 der Auffangbehälter Rastmittel aufweist, die mit dem Pressfilter zusammenwirken und einen Formschluss bereitstellen. Die WO 02/067739 A1 und die EP 2 798 985 A1 offenbaren Auffangplatten, welche mittels eines Formschlusses mit dem Pressfilter gekuppelt werden. Die FR 1 557 460 A offenbart einen Behälter, mit welchem das unlösliche Material in einen Container eingetaucht werden kann. Ein Pressfilter wird dort nicht verwendet.

Insbesondere dann, wenn eine relativ große Menge von unlöslichem Material verwendet worden ist, muss das unlösliche Material soweit komprimiert werden, dass der Pressfilter in den Auffangbehälter eingebracht werden kann, wozu eine relativ große Kraft notwendig sein kann. Je größer die aufgewendete Kraft, desto stärker wird das unlösliche Material komprimiert, welches ab einem bestimmten Komprimierungsgrad den Pressfilter blockiert. Auf das das komprimierte Material umgebende Wasser wird demzufolge eine Kraft aufgebracht, da es den Pressfilter nicht mehr durchströmen kann. Das Wasser sucht sich dann andere Wege, beispielsweise durch die Kontaktfläche zwischen dem Container und dem Pressfilter, um dem entsprechenden Druck auszuweichen. Da aber der Pressfilter etwas gegenüber dem Container vorgespannt ist, muss eine entsprechend starke Kraft auf das Wasser aufgebracht werden, um die Kontaktfläche zu überwinden. Wird der entsprechende Druck überschritten, strömt ein Teil des Wassers schlagartig durch die Kontaktfläche, was zu kurzfristigen wellenartige Bewegungen des Wassers im Container führen kann, wodurch ein Teil des Wassers aus dem Container heraus schwappen kann. Der entsprechende Druck und die hierzu vom Benutzer aufzubringende Kraft sind aber schwer vorhersehbar, wodurch die Bedienung der Aufgussvorrichtung unangenehm sein kann.

Aufgabe der vorliegenden Erfindung ist es daher, einen Auffangbehälter und eine Aufgussvorrichtung der zuvor beschriebenen Art anzugeben, mit denen den oben genannten Nachteilen begegnet wird. Insbesondere soll das Kuppeln des Auffangbehälters mit der Kolben-Filteranordnung auch dann mit wenig Kraftaufwand bewirkt werden können, wenn eine größere Menge von unlöslichem Material verwendet wird. Zudem sollen plötzlich auftretende wellenartige Bewegungen des Wassers oder des Getränks beim Herunterdrücken des Pressfilters verhindert werden.

Diese Aufgabe wird mit den in den Ansprüchen 1 und 8 angegebenen Merkmalen gelöst. Vorteilhafte Ausführungsformen sind Gegenstand der Unteransprüche.

Eine Ausführungsform der Erfindung betrifft einen Auffangbehälter zum Auffangen von unlöslichem Material, welches bei der Zubereitung von Getränken mittels einer Aufgussvorrichtung verwendet wird, wobei die Aufgussvorrichtung einen Container mit einem offenen Ende und einem geschlossenen Ende zum Aufnehmen des Getränks und des unlöslichen Materials und eine Kolben-Filteranordnung umfasst, die über das offene Ende in den Container einbringbar und zum geschlossenen Ende hin bewegbar ist, wobei der Auffangbehälter in den Container einbringbar ist und eine Wandung, welche eine Öffnung bildet, die von einem Rand umschlossen wird, und zumindest ein erstes Kupplungselement aufweist, welches mit zumindest einem zweiten Kupplungselement der Kolben-Filteranordnung derart kuppelbar ist, dass im gekuppelten Zustand zwischen dem Rand des Auffangbehälters und der Kolben-Filteranordnung ein Abstand gebildet wird, wozu das erste Kupplungselement auf einem zentralen Vorsprung des Auffangbehälters angeordnet ist und der zentrale Vorsprung über den Rand hervorragt.

Im Rahmen dieser Anmeldung soll unter einer Kolben-Filteranordnung Folgendes verstanden werden: Die Kolben-Filteranordnung umfasst einen Pressfilter, der beispielsweise aus einem feinporigen Netz aus Metall gefertigt sein kann und an einer Kolbenstange befestigt ist. Der Pressfilter kann beispielsweise zwischen zwei Platten angeordnet sein, um ihn in die gewünschte Form zu bringen und in dieser zu halten. Die Platten weisen entsprechende Löcher auf, um die Durchströmung des Pressfilters nicht zu behindern. Die Platten sind dabei so geformt, dass der Pressfilter den gesamten Querschnitt des Containers überdeckt und an der seitlichen Wandung des Containers anliegt.

Wie eingangs beschrieben, wird der Auffangbehälter in den Container eingebracht, bevor das unlösliche Material und das Wasser in den Container gefüllt werden. Nachdem das Wasser und das unlösliche Material genügend Zeit hatten, um miteinander in Wechselwirkung zu treten, wird der Pressfilter mittels der Kolbenstange zum geschlossenen Ende des Containers gedrückt, so dass das unlösliche Material vom Wasser getrennt und der Pressfilter mit dem Auffangbehälter gekuppelt werden. Die Kupplungselemente können beispielsweise so ausgeführt sein, dass die Kupplung mittels eines Reibschlusses oder mittels einer magnetischen Interaktion bewirkt wird.

Erfindungsgemäß verbleibt ein Abstand zwischen dem Rand des Containers und der Kolben-Filteranordnung, wenn der Auffangbehälter mit der Kolben-Filteranordnung gekuppelt ist. Somit wird die Stellung des Pressfilters im gekuppelten Zustand gegenüber dem Auffangbehälter eindeutig festgelegt. Hierdurch wird verhindert, dass das unlösliche Material insbesondere dann, wenn eine größere Menge verwendet wird, zu stark komprimiert wird. Die Kraft, die notwendig ist, um die Kolben-Filteranordnung mit dem Auffangbehälter zu kuppeln, wird hierdurch gering gehalten. Eine übermäßige Belastung der Kolben-Filteranordnung und insbesondere der Kolbenstange und des Pressfilters wird hierdurch vermieden. Zudem wird verhindert, dass ein Teil des Wassers, welches das komprimierte unlösliche Material umgibt, schlagartig die Kontaktfläche zwischen dem Pressfilter und dem Container durchströmt und somit eine wellenartige Bewegung des Wassers im Container und ein dadurch verursachtes Herausschwappen des Wassers aus dem Container hervorruft. Die Bedienung der Aufgussvorrichtung wird hierdurch angenehmer und sicherer.

Das erste Kupplungselement ist hierzu auf einem zentralen Vorsprung des Auffangbehälters angeordnet. Ein zentraler Vorsprung ist einfach zu fertigen, da der Auffangbehälter rotationssymmetrisch ausgestaltet werden kann. Zudem nimmt er kein großes Volumen in Anspruch, so dass die Kapazität des Auffangbehälters zum Aufnehmen des unlöslichen Materials kaum reduziert wird. Darüber hinaus stört der zentrale Vorsprung die Strömung des Wassers, welches das unlösliche Material umgibt, so gut wie gar nicht, so dass die oben beschriebenen wellenartigen Bewegungen, wie sie aus dem Stand der Technik bekannt sind, nicht auftreten. Weiterhin kann die Kupplung zwischen dem Auffangbehälter und der Kolben-Filteranordnung mit nur einem ersten und nur einem zweiten Kupplungselement bewirkt werden, was die Fertigung vereinfacht und günstig hält.

Der zentrale Vorsprung ragt über die Öffnung heraus oder hervor. Über die Länge des zentralen Vorsprungs kann mit geringem Fertigungsaufwand der Abstand zwischen dem Rand und der Kolben-Filteranordnung im gekuppelten Zustand gewählt werden.

Erfindungsgemäß umschließt der zentrale Vorsprung einen Hohlraum. Grundsätzlich kann der zentrale Vorsprung massiv ausgestaltet sein, jedoch kann mit Vorsehen des Hohlraums Material und Gewicht eingespart werden, ohne die Stabilität des zentralen Vorsprungs gegenüber einer massiven Ausgestaltung zu stark zu reduzieren. Zudem könnte es bei einem massiv ausgestalteten Vorsprung zu einer ungleichmäßigen Abkühlung kommen, was zu Einfallstellen führen kann. Die ursprünglich vorgesehene Form des Vorsprungs könnte dann nicht mehr gewährleistet sein. Der Hohlraum kann zudem zum freien Ende hin konisch zulaufen, was das Entformen vereinfacht.

Gemäß der Erfindung umfasst das erste Kupplungselement eine in den Hohlraum mündende Kupplungsöffnung an einem freien Ende des zentralen Vorsprungs. Das zweite Kupplungselement kann zum Kuppeln des Auffangbehälters mit der Kolben-Filteranordnung mit der Kupplungsöffnung zusammenwirken, insbesondere dadurch, dass das zweite Kupplungselement durch die Kupplungsöffnung hindurchgeführt wird. Die Kupplungsöffnung lässt sich leicht fertigen und kann beispielsweise im Spritzgussverfahren bereits vorgesehen sein oder sie kann nachträglich mit einem relativ einfachen Bohrvorgang hergestellt werden.

Erfindungsgemäß ist vorgesehen, dass sich die Kupplungsöffnung vom freien Ende aus gesehen konisch verjüngt. Wie bereits erwähnt, kann die Kupplung des Auffangbehälters mit der Kolben-Filteranordnung dadurch bewirkt werden, dass das zweite Kupplungselement durch die Kupplungsöffnung durchgeführt wird. Die konische Verjüngung bewirkt dabei eine Zentrierung, so dass die Kupplung auch dann problemlos ausgeführt werden kann, wenn das erste und das zweite Kupplungselement nicht exakt fluchtend zueinander ausgerichtet sind. Mit der Wahl der Stärke der Verjüngung kann die Stabilität der Kupplungsöffnung erhöht werden. Hierdurch lässt sich auch festlegen, wie fest die Filter-Kolbenanordnung mit dem Auffangbehälter gekoppelt wird und welche Kraft zum Lösen der Kolben-Filteranordnung vom Auffangbehälter notwendig ist.

Eine weitere Ausführungsform zeichnet sich dadurch aus, dass der zentrale Vorsprung eine erste Höhe und der Auffangbehälter im Rand eine zweite Höhe aufweisen und der zentrale Vorsprung mit einer Höhendifferenz zwischen 1 mm und 8 mm und insbesondere zwischen 2 mm und 6 mm über den Rand hervorragt. Die Höhendifferenz ergibt sich aus der Differenz zwischen der ersten Höhe und der zweiten Höhe, welche den Abstand zwischen dem Rand und der Kolben-Filteranordnung im gekuppelten Zustand bestimmt. Es hat sich herausgestellt, dass sich das zuvor erwähnte Herausschwappen besonders wirkungsvoll verhindern lässt, wenn die Höhendifferenz im genannten Bereich liegt. Wird die Höhendifferenz zu groß gewählt, wird der Teil des unlöslichen Materials, welcher sich im gekuppelten Zustand zwischen dem Rand und der Kolben-Filteranordnung befindet und nicht vom Auffangbehälter aufgenommen wird, zu groß. Dieser Teil kann sich beim Herausziehen des mit der Kolben-Filteranordnung gekoppelten Auffangbehälters unkontrolliert verteilen, wodurch unerwünschte Verschmutzungen hervorgerufen werden. Liegt die Höhendifferenz im angegebenen Bereich, ist die Gefahr, dass sich dieser Teil unkontrolliert verteilt, relativ gering.

Gemäß einer weiteren Ausführungsform weist der Auffangbehälter einen Durchmesser auf und das Verhältnis der Höhendifferenz zum Durchmesser beträgt zwischen 0,01 und 0,07 und insbesondere zwischen 0,02 und 0,06. Die Tendenz des Herausschwappens nimmt generell mit abnehmendem Durchmesser zu, weil aufgrund der abnehmenden Oberfläche der Öffnung der von der Kolben-Filteranordnung aufgebrachte Druck im Auffangbehälter erhöht wird. Liegt dieses Verhältnis im angegebenen Bereich, wird das bereits beschriebene unkontrollierte Herausschwappen wirkungsvoll verhindert.

Gemäß einer weiteren Ausführungsform weist der zentrale Vorsprung mindestens eine vom freien Ende ausgehende und die Wandung durchdringende Ausnehmung auf. Mit der Ausnehmung wird der Vorsprung im Bereich des freien Endes, wo auch das erste Kupplungselement angeordnet ist, gezielt geschwächt, so dass sich die Kupplungsöffnung etwas weiten kann, wenn das zweite Kupplungselement durchgeführt wird. Es bietet sich an, den Auffangbehälter aus einem elastisch verformbaren Kunststoff wie Tritan oder POM (Polyoxymethylen) herzustellen, so dass sich die Kupplungsöffnung nach dem Weiten wieder auf die ursprüngliche Größe zusammenzieht. Mit der Dimensionierung der Ausnehmung kann die Kraft, die zum Weiten der Kupplungsöffnung notwendig ist, gezielt beeinflusst werden.

Gemäß einer weiteren Ausführungsform wird der zentrale Vorsprung von der Wandung gebildet. Folglich kann der Vorsprung als integraler Bestandteil des Auffangbehälters ausgeführt werden und muss nicht als separates Teil in einem zusätzlichen Arbeitsschritt mit dem übrigen Auffangbehälter verbunden werden. Hierdurch wird die Fertigung des vorschlagsgemäßen Auffangbehälters deutlich vereinfacht.

In einer weitergebildeten Ausführungsform bildet die Wandung einen Bodenbereich und einen Seitenbereich, wobei die Wandung im Seitenbereich in etwa senkrecht zum Bodenbereich verläuft. Hierdurch wird eine relativ optimale Raumausnutzung erreicht, so dass der Auffangbehälter mit einem relativ geringen Materialeinsatz ein relativ großes Volumen zur Aufnahme des unlöslichen Materials bereitstellen kann. Die bereitgestellten Volumina betragen beispielsweise zwischen 5 und 25 cm³, so dass ein genügend großes Volumen zur Aufnahme der üblicherweise zur Zubereitung eines Aufgussgetränks verwendeten Mengen an unlöslichem Material wie Kaffeepulver oder Teeblättern bereitsteht. Unter der Bezeichnung "in etwa senkrecht" soll verstanden werden, dass man zwar bestrebt ist, die Seitenbereich so weit wie möglich senkrecht zum Bodenbereich anzuordnen. Allerdings ist es zum problemlosen und beschädigungsfreien Entformen aus den Spritzgusswerkzeug notwendig, den Seitenbereich leicht konisch verlaufen zu lassen. Je nach verwendetem Kunststoff weicht der Winkel zwischen dem Bodenbereich und dem Seitenbereich zwischen 0,5 und 2,5° vom rechten Winkel ab.

In einer alternativen Ausführungsform weist der Auffangbehälter eine Anzahl von Durchgangsöffnungen auf. Die Durchgangsöffnungen sind so bemessen, dass sie eine Trennung des Wassers vom komprimierten unlöslichen Material innerhalb des Auffangbehälters bewirkten, wodurch das komprimierte unlösliche Material entwässert werden kann. Die Entwässerung verhindert, dass bei der Reinigung des Auffangbehälters Wasser unkontrolliert aus dem Auffangbehälter heraustropft. Darüber hinaus wird verhindert, dass sich im Auffangbehälter ein zu hoher Druck aufbaut, wenn das unlösliche Material mit der Kolben-Filteranordnung komprimiert wird. Auch hierdurch wird die Kupplung des Auffangbehälters mit der Kolben-Filteranordnung vereinfacht.

Eine Ausgestaltung der Erfindung betrifft eine Aufgussvorrichtung zum Zubereiten von Getränken, umfassend einen Container mit einem offenen Ende und einem geschlossenen Ende zum Aufnehmen des Getränks und des unlöslichen Materials, eine Kolben-Filteranordnung umfasst, die über das offene Ende in den Container einbringbar und zum geschlossenen Ende hin bewegbar ist, und einen in den Container einbringbaren Auffangbehälter insbesondere nach einem der zuvor beschriebenen Ausführungsbeispiele, der mit der Kolben-Filteranordnung kuppelbar ist, wobei im gekuppelten Zustand ein Abstand zwischen dem Auffangbehälters und der Kolben-Filteranordnung gebildet wird. Die technischen Effekte und Vorteile, die sich mit der vorschlagsgemäßen Aufgussvorrichtung erreichen lassen, entsprechen denjenigen, die für den vorschlagsgemäßen Auffangbehälter erörtert worden sind. Zusammenfassend sei darauf hingewiesen, dass der Auffangbehälter mit einem im Vergleich zu aus dem Stand der Technik bekannten Aufgussvorrichtungen deutlich geringerem Kraftaufwand mit der Kolben-Filteranordnung verbunden werden kann, ohne dass es zu unkontrollierten wellenartigen Bewegungen innerhalb des Wassers kommt, wodurch die Wahrscheinlichkeit, dass das Wasser unkontrolliert aus dem Container heraus schwappt, deutlich verringert wird.

Bei einer weiteren Ausführungsform beträgt der Abstand zwischen dem Rand und der Kolben-Filteranordnung zwischen 3 und 10 mm, insbesondere zwischen 4 und 6 mm. Es hat sich als vorteilhaft herausgestellt, den Abstand innerhalb dieses Bereichs zu wählen. Einerseits wird das Volumen des gefilterten Getränks nicht zu stark begrenzt, andererseits wird sichergestellt, dass das unlösliche Material nicht zu stark komprimiert wird und somit der Auffangbehälter ohne große Kraftaufwendung mit der Kolben-Filteranordnung gekuppelt und wieder voneinander getrennt werden kann. Insbesondere in Kombination mit dem kugel- oder zylinderförmigen Abschnitt ist bei diesem Abstand gewährleistet, dass der Auffangbehälter in einem ausreichenden Umfang gegenüber der Kolben-Filteranordnung gedreht werden kann, ohne anzuschlagen.

Bei einer weiteren Ausführungsform können das erste Kupplungselement und das zweite Kupplungselement im gekuppelten Zustand miteinander zusammenwirkende Formschlussmittel umfassen. Die Verwendung von Formschlussmitteln hat den Vorteil, dass relativ teure und mitunter aus Gründen der Lebensmittelsicherheit bedenkliche Materialien, beispielsweise magnetische oder magnetisierbare Materialien, nicht benötigt werden. Gegenüber einer Kupplung durch Reibschluss weisen die Formschlussmittel eine erhöhte Zuverlässigkeit aus. Mit den heutzutage verfügbaren Verfahren für die Formgebung, beispielsweise dem Spritzguss, ist es ohne größeren Aufwand möglich, die Kupplungselemente entsprechend auszubilden. Darüber hinaus können die Formschlussmittel so ausgeführt werden, dass dem Benutzer eine eindeutige Rückmeldung gegeben wird, wenn der Auffangbehälter mit der Kolben-Filteranordnung gekoppelt ist, beispielsweise durch ein spürbares Einrasten.

Eine Ausführungsform zeichnet sich dadurch aus, dass das erste Kupplungselement oder das zweite Kupplungselement einen im Wesentlichen kugelförmigen oder zylinderförmigen Abschnitt umfasst, der im gekuppelten Zustand von Rastarmen des jeweils anderen Kupplungselements umgriffen wird. Der kugelförmige oder zylinderförmige Abschnitt stellt eine Hinterschneidung bereit, in welche die Rastarme eingreifen können. In dieser Ausführungsform ist der Auffangbehälter zumindest um eine Achse gegenüber der Kolben-Filteranordnung drehbar. Hierdurch wird das Lösen des Auffangbehälters von der Kolben-Filteranordnung nach Gebrauch der Aufgussvorrichtung deutlich erleichtert, da der Benutzer den Auffangbehälter in eine für ihn günstige Stellung relativ zur Kolben-Filteranordnung bringen kann. Insbesondere dann, wenn die Kupplungselemente auf dem zentralen Vorsprung angeordnet sind, ist der Drehwinkel, mit welchen der Auffangbehälter in Bezug zur Kolben-Filteranordnung gedreht werden kann, relativ groß und vergrößert sich mit zunehmendem Abstand zwischen dem Rand und dem Pressfilter. Je größer der Drehwinkel, desto bequemer ist es für den Benutzer, den Auffangbehälter von der Kolben-Filteranordnung zu trennen.

Beispielhafte Ausführungsformen der Erfindung werden im Folgenden unter Bezugnahme auf die beigefügten Zeichnungen näher erläutert. Es zeigen
- Figur 1a): eine prinzipielle Darstellung eines unteren Teils einer Aufgussvorrichtung mit einem Auffangbehälter nach dem Stand der Technik, im nicht gekuppelten Zustand,
- Figur 1b): die in Figur 1a) dargestellte Aufgussvorrichtung im gekuppelten Zustand,
- Figur 2: eine Schnittdarstellung eines unteren Teils einer Aufgussvorrichtung mit einem vorschlagsgemäßen Auffangbehälter nach einem ersten Ausführungsbeispiel im gekuppelten Zustand,
- Figur 3a): eine Schnittdarstellung durch ein zweites Ausführungsbeispiel des vorschlagsgemäßen Auffangbehälters, und
- Figur 3b): eine perspektivische Darstellung des in Figur 3a) dargestellten Auffangbehälters.

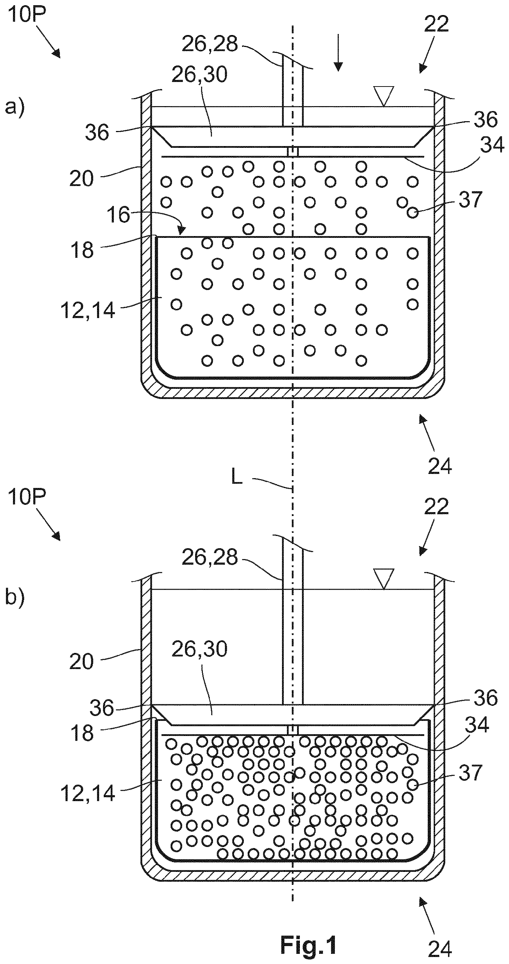

In den Figuren 1a) und 1b) ist der untere Teil einer Aufgussvorrichtung 10P mit einem Auffangbehälter 12 nach dem Stand der Technik dargestellt. Der Auffangbehälter 12 wird im Wesentlichen von einer Wandung 14 gebildet und weist eine Öffnung 16 auf, die von einem Rand 18 umschlossen wird.

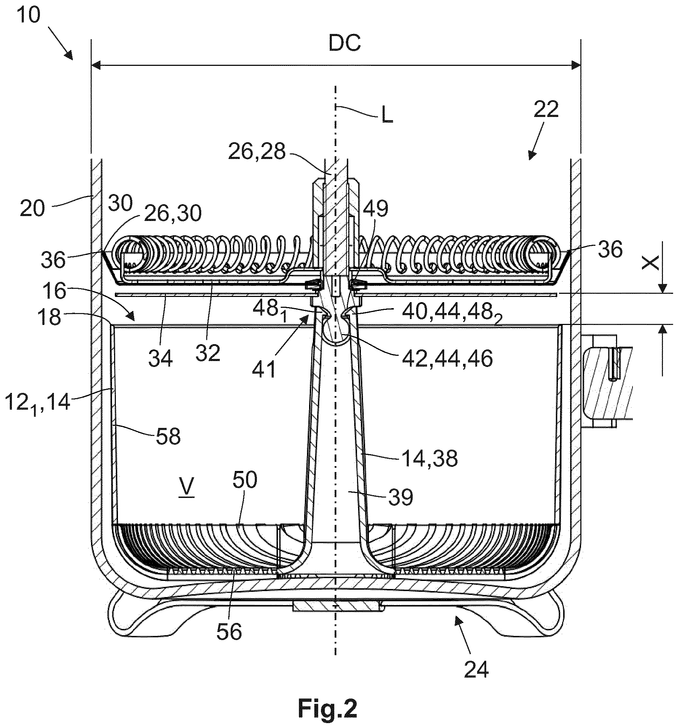

Die Aufgussvorrichtung 10P umfasst einen im Wesentlichen zylinderförmigen Container 20 mit einer Längsachse L und mit einem offenen Ende 22 und einem geschlossenen Ende 24. Weiterhin umfasst die Aufgussvorrichtung 10P eine Kolben-Filteranordnung 26, die eine Kolbenstange 28 und einen hieran befestigten Pressfilter 30 aufweist. Der Pressfilter 30 wird mit einer über dem Pressfilter 30 angeordneten oberen Platte 32 (hier nicht dargestellt, vgl. Figur 2) und einer unter dem Pressfilter 30 angeordneten unteren Platte 34 so fixiert, dass der Pressfilter 30 seitlich am Container 20 anliegt, wodurch eine seitliche Kontaktfläche 36 gebildet wird.

Zum Zubereiten eines Getränks wird zunächst der Auffangbehälter 12 in den Container 20 eingebracht, so dass er mit dem Abschnitt der Wandung 14, welcher der Öffnung 16 gegenüber liegt, am geschlossenen Ende 24 des Containers 20 anliegt. Der Auffangbehälter 12 ist so bemessen, dass er auch seitlich nahezu am Container 20 anliegt, allerdings muss ein gewisser Spalt vorgehalten werden, um ein Verklemmen des Auffangbehälters 12 im Container 20 zu verhindern. Anschließend wird eine bestimmte Menge eines unlöslichen Materials 37, beispielsweise Kaffeepulver oder Teeblätter, in den Behälter gegeben und mit Wasser, üblicherweise mit heißem Wasser, übergossen. Dabei verteilt sich das übergossene unlösliche Material 37 weitgehend gleichmäßig innerhalb des Containers 20. Nachdem das unlösliche Material 37 für die gewünschte Zeit mit dem Wasser in Wechselwirkung treten konnte, wird die Kolben-Filteranordnung 26 über das offene Ende 22 in den Container 20 eingebracht und der Pressfilter 30 mittels der Kolbenstange 28 entlang der Längsachse L zum geschlossenen Ende 24 des Containers 20 gedrückt (siehe Figur 1a)). Je weiter der Pressfilter 30 zum geschlossenen Ende 24 des Containers 20 gedrückt wird, desto mehr wird das unlösliche Material 37 komprimiert und zum Auffangbehälter 12 hin bewegt. Ab einer gewissen Stellung des Pressfilters 30 taucht dieser mit der unteren Platte 34 in den Auffangbehälter 12 ein (vgl. Figur 1b)). Je nach Ausgestaltung des Pressfilters 30 und des Auffangbehälters 12 wird die Kupplung mittels eines Reibschlusses zwischen dem Pressfilter 30, hier im Wesentlichen mit der unteren Platte 34, und der inneren Oberfläche des Auffangbehälters 12, wie in Figur 1b) dargestellt, oder mittels eines Formschlusses zwischen dem Pressfilter 30, insbesondere der unteren Platte 34, und dem Auffangbehälter 12 bewirkt, wozu im letzteren Fall entsprechende Verbindungselemente vorgesehen sein können (nicht gezeigt). In beiden Fällen ist Voraussetzung für die Kupplung, dass der Pressfilter 30 zumindest teilweise in den Auffangbehälter 12 eingebracht wird.

Ist jedoch die Menge des unlöslichen Materials 37 sehr groß gewählt, beispielsweise, um einen besonders starken Kaffee zuzubereiten, ist der Auffangbehälter 12 sehr schnell weitgehend mit dem unlöslichen Material 37 gefüllt. Um dennoch eine Kupplung zu bewirken, muss der Pressfilter 30 mit einem erhöhten Kraftaufwand gegen das komprimierte unlösliche Material 37 in den Auffangbehälter 12 eingebracht werden, was einerseits für eine starke Belastung insbesondere der Kolbenstange 28 führt und andererseits unangenehm für den Benutzer ist. Weiterhin kann der Pressfilter 30 durch das unlösliche Material 37 blockieren, so dass das Wasser diesen nicht durchströmen kann. Bringt der Benutzer eine entsprechend hohe Kraft auf, strömt ein Teil des Wassers schlagartig von dem bezogen auf die in Figuren 1a) und 1b) gewählte Darstellung unter dem Pressfilter 30 befindlichen Bereich über die Kontaktfläche 36 in den Bereich oberhalb des Pressfilters 30, wodurch wellenartige Bewegungen in das Wasser eingetragen werden können und ein Teil des Wassers aus dem Container 20 schwappen kann.

Nachdem das Getränk zubereitet und konsumiert worden ist und der Auffangbehälter 12 vom Pressfilter 30 getrennt werden soll, kann die Lage der Kolben-Filteranordnung 26 relativ zum Auffangbehälter 12 nicht verändert werden, und insbesondere kann die Kolben-Filteranordnung 26 nicht gegenüber dem Auffangbehälter 12 gedreht werden, da dann der Pressfilter 30 im Auffangbehälter 12 verkanten würde und zumindest an einer Seite das unlösliche Material 37 weiter komprimiert werden müsste. Hierdurch wird der Trennungsprozess erschwert.

In Figur 2 ist eine vorschlagsgemäße Aufgussvorrichtung 10 anhand einer Schnittdarstellung gezeigt, wobei der Auffangbehälter 12₁ nach einem ersten Ausführungsbeispiel mit der Kolben-Filteranordnung 26 gekuppelt ist. Die Aufgussvorrichtung weist im Wesentlichen denselben prinzipiellen Aufbau wie die in den Figuren 1a) und 1b) gezeigte Aufgussvorrichtung 10 auf. Zusätzlich eingezeichnet ist der Durchmesser DC des Containers 20.

Im Gegensatz zum aus dem Stand der Technik bekanntem Auffangbehälter 12, der in den Figuren 1a) und 1a) gezeigt ist, weist der vorschlagsgemäße Auffangbehälter 12₁ einen sich von einem Bodenbereich 56 des Auffangbehälters 12₁ säulenförmig um die Längsachse L erhebenden zentralen Vorsprung 38 auf, der von der Wandung 14 gebildet wird, ein freies Ende 41 aufweist und einen Hohlraum 39 umschließt. Auf dem zentralen Vorsprung 38 ist an seinem freien Ende 41 ein erstes Kupplungselement 40 angeordnet, welches zum Kuppeln des Auffangbehälters 12₁ mit der Kolben-Filteranordnung 26 mit einem zweiten Kupplungselement 42 der Kolben-Filteranordnung 26 zusammenwirkt, das etwas unterhalb des Pressfilters 30 und der unteren Platte 34 angeordnet ist. Im dargestellten Beispiel weisen das erste Kupplungselement 40 und das zweite Kupplungselement 42 Formschlussmittel 44 auf, wodurch die Verbindung oder Kupplung zwischen dem Auffangbehälter 12₁ und der Kolben-Filteranordnung 26 mittels eines Formschlusses bewirkt wird. Im konkreten Fall weist das zweite Kupplungselement 40 einen kugelförmigen Abschnitt 46 auf, der im gekuppelten Zustand von zwei Rastarmen 48₁ und 48₂ des ersten Kupplungselements 40 umgriffen wird, die vom Vorsprung 38 gebildet werden. Der kugelförmige Abschnitt 46 bildet Hinterschneidungen 49, in welche die Rastarme 48₁ und 48₂ eingreifen.

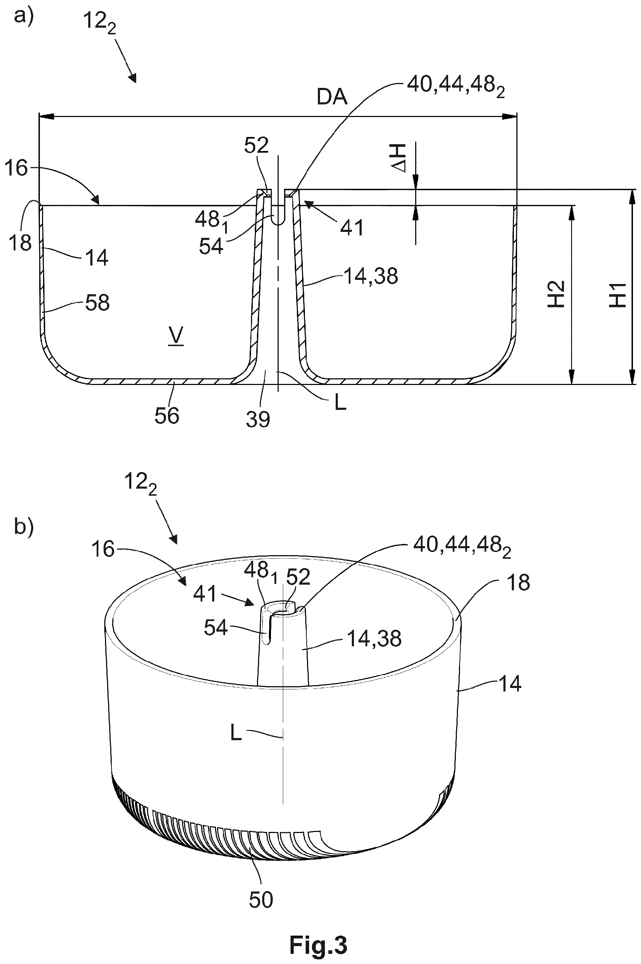

Der in den Figuren 3a) und 3b) dargestellte Auffangbehälter nach dem zweiten Ausführungsbeispiel 122 unterscheidet sich lediglich in den Abmessungen vom Auffangbehälter nach dem ersten Ausführungsbeispiel. Wie insbesondere aus den Figuren 3a) und 3b) hervorgeht, weist der zentrale Vorsprung 38 eine in den Hohlraum 39 mündende Kupplungsöffnung 52 auf, welche sich vom freien Ende 41 aus gesehen konisch verjüngt. Weiterhin weist der zentrale Vorsprung 38 zwei die Wandung 14 durchdringende Ausnehmungen 54 auf, welche die Rastarme 48₁ und 48₂ voneinander trennen.

Wie aus Figur 2 weiter hervorgeht, sind die Kupplungselemente 40, 42 so gestaltet, dass der Pressfilter 30 bzw. die untere Platte 34 des Pressfilters 30 im gekuppelten Zustand bezogen auf die Längsachse L einen Abstand X zum Rand 18 des Auffangbehälters 12₁ aufweist. Folglich ist es im Gegensatz zur in den Figuren 1a) und 1a) dargestellten Aufgussvorrichtung 10 nicht notwendig, den Pressfilter 30 zum Kuppeln in den Auffangbehälter 12₁ einzubringen. Die Kupplungselemente 40, 42 legen im gekoppelten Zustand eine eindeutige Position der Kolben-Filteranordnung 26 relativ zum Auffangbehälter 12₁ fest, wodurch das Kuppeln auch mit einem geringen Kraftaufwand ermöglicht wird, da das unlösliche Material 37 nur bis zu einem bestimmten Komprimierungsgrad komprimiert werden kann. Der Abstand X ist so bemessen, dass keine so hohe Kraft auf das Wasser aufgebracht und das unlösbare Material 37 nicht so weit komprimiert werden können, dass ein Teil des Wassers schlagartig vom Bereich unter dem Pressfilter 30 über die Kontaktfläche 36 in den Bereich oberhalb des Pressfilters 30 strömen kann.

Die Wandung 14 des Auffangbehälters 12₁ bildet den Bodenbereich 56 und einen Seitenbereich 58, wobei die Wandung 14 im Seitenbereich 58 in etwa senkrecht zum Bodenbereich 56 verläuft. Weiterhin weist der Auffangbehälter 12₁ eine Anzahl von im Bodenbereich 56 und im Übergangsbereich zwischen dem Bodenbereich 56 und dem Seitenbereich 58 angeordnete Entwässerungsöffnungen 50 auf, welche die Wandung 14 des Auffangbehälters 12₁ durchdringen, wodurch das im Auffangbehälter 12₁ angesammelte unlösliche Material 37 entwässert werden kann. Zudem bewirken die Durchgangsöffnungen 50, dass sich kein erhöhter Druck im Auffangbehälter 12₁ aufbauen kann.

Insbesondere durch den Abstand X zwischen dem Rand 18 und dem Pressfilter 30 und unter Verwendung des kugelförmigen Abschnitts 46 des zweiten Kupplungselements 42 und der den kugelförmigen Abschnitt 46 umgreifenden Rastarme 48 des ersten Kupplungselements 40 wird es ermöglicht, den Auffangbehälter 12₁ in Bezug auf die Kolben-Filteranordnung 26 zu drehen. Hierdurch kann der Benutzer den Auffangbehälter 12₁ in eine für ihn günstige Stellung relativ zur Kolben-Filteranordnung 26 bringen, wodurch das Trennen des Auffangbehälters 12₁ von der Kolben-Filteranordnung 26 nach Gebrauch der Aufgussvorrichtung 10 deutlich erleichtert wird.

Wie aus der Figur 3a) zu erkennen, weist der Auffangbehälter 122 den Durchmesser DA und ausgehend vom Bodenbereich 56 im Rand 18 die Höhe H2 auf. Der zentrale Vorsprung 38 weist ausgehend vom Bodenbereich 56 die Höhe H1 auf. Man erkennt, dass der Vorsprung 38 mit einer Höhendifferenz ΔH = H1 - H2 über den Rand 18 hervorragt.

Bei sämtlichen Ausführungsbeispiele des vorschlagsgemäßen Auffangbehälters 12 beträgt die Höhendifferenz zwischen 1 mm und 8 mm. Weiterhin beträgt das Verhältnis der Höhendifferenz ΔH zum Durchmesser DA zwischen 0,01 und 0,07. Das vom Auffangbehälter 12 bereitgestellte Volumen beträgt zwischen 5 und 25 cm³.

In der Tabelle 1 sind drei Ausführungsbeispiele von Auffangbehältern 12 aufgeführt, welche entsprechende Abmessungen, Abmessungsverhältnisse und Volumina aufweisen. Zusätzlich ist der Durchmesser DC der Container 10 angegeben, mit denen die Auffangbehälter 12 verwendet werden können.

**Tabelle 1: Abmessungen verschiedener Ausführungsbeispiele des vorschlagsgemäßen Auffangbehälters 12.**

| | Auffangbehälter 1 | Auffangbehälter 2 | Auffangbehälter 3 |
|---|---|---|---|
| DC (mm) | 68 | 96 | 116,5 |
| DA (mm) | 61,2 | 88,5 | 107 |
| H1 (mm) | 39,9 | 53,6 | 43,6 |
| H2 (mm) | 36,3 | 50 | 40 |
| ΔH (mm) | 3,6 | 3,6 | 3,6 |
| ΔH/DA | 0,058 | 0,041 | 0,034 |
| V (cm³) | 10,3 | 19,5 | 22,1 |

### Bezugszeichenliste

- 10: Aufgussvorrichtung
- 10P: Aufgussvorrichtung nach dem Stand der Technik
- 12, 12₁, 12₂: Auffangbehälter
- 14: Wandung
- 16: Öffnung
- 18: Rand

- 20: Container
- 22: offenes Ende
- 24: geschlossenes Ende
- 26: Kolben-Filteranordnung
- 28: Kolbenstange

- 30: Pressfilter
- 32: obere Platte
- 34: untere Platte
- 36: Kontaktfläche
- 37: unlösliches Material
- 38: Vorsprung
- 39: Hohlraum

- 40: erstes Kupplungselement
- 41: freies Ende
- 42: zweites Kupplungselement
- 44: Formschlussmittel
- 46: kugelförmiger Abschnitt
- 48, 48₁, 48₂: Rastarm
- 49: Hinterschneidungen

- 50: Entwässerungsöffnung
- 52: Kupplungsöffnung
- 54: Ausnehmung
- 56: Bodenbereich
- 58: Seitenbereich

- DA: Durchmesser Auffangbehälter
- DC: Durchmesser Container
- H1: Höhe Vorsprung
- H2: Höhe Auffangbehälter im Rand
- ΔH: Höhendifferenz H1 - H2
- L: Längsachse
- V: Volumen Auffangbehälter
- X: Abstand

## Patentansprüche

1. Auffangbehälter (12) zum Auffangen von unlöslichem Material (37), welches bei der Zubereitung von Getränken mittels einer Aufgussvorrichtung (10) verwendet wird, wobei die Aufgussvorrichtung (10)
- einen Container (20) mit einem offenen Ende (22) und einem geschlossenen Ende (24) zum Aufnehmen des Getränks und des unlöslichen Materials (37), und
- eine Kolben-Filteranordnung (26) umfasst, die über das offene Ende (22) in den Container (20) einbringbar und zum geschlossenen Ende (24) hin bewegbar ist,
wobei der Auffangbehälter (12)
- in den Container (20) einbringbar ist,
- eine Wandung (14), welche eine Öffnung (16) bildet, die von einem Rand (18) umschlossen wird, und
- zumindest ein erstes Kupplungselement (40) aufweist, welches mit zumindest einem zweiten Kupplungselement (42) der Kolben-Filteranordnung (26) derart kuppelbar ist, dass im gekuppelten Zustand zwischen dem Rand (18) des Auffangbehälters (12) und der Kolben-Filteranordnung (26) ein Abstand (X) gebildet wird, wozu das erste Kupplungselement (40) auf einem zentralen Vorsprung (38) des Auffangbehälters (12) angeordnet ist und der zentrale Vorsprung (38) über den Rand (18) hervorragt,
**dadurch gekennzeichnet, dass**
- der zentrale Vorsprung (38) einen Hohlraum (39) umschließt,
- das erste Kupplungselement (40) eine in den Hohlraum (39) mündende Kupplungsöffnung (52) an einem freien Ende (41) des zentralen Vorsprungs (38) umfasst, und
- sich die Kupplungsöffnung (52) vom freien Ende (41) aus gesehen konisch verjüngt.

2. Auffangbehälter nach Anspruch 1,
**dadurch gekennzeichnet, dass** der zentrale Vorsprung (38) eine erste Höhe (H1) und der Auffangbehälter (12) im Rand (18) eine zweite Höhe (H2) aufweisen und der zentrale Vorsprung (38) mit einer Höhendifferenz (ΔH) zwischen 1 mm und 8 mm und insbesondere zwischen 2 mm und 6 mm über den Rand (18) hervorragt.

3. Auffangbehälter nach einem der vorherigen Ansprüche,
**dadurch gekennzeichnet, dass** der Auffangbehälter (12) einen Durchmesser (DA) aufweist und das Verhältnis der Höhendifferenz (ΔH) zum Durchmesser (DA) zwischen 0,01 und 0,07 beträgt.

4. Auffangbehälter nach einem der vorherigen Ansprüche,
**dadurch gekennzeichnet, dass** der zentrale Vorsprung (38) mindestens eine vom freien Ende (41) ausgehende und die Wandung (14) durchdringende Ausnehmung (54) aufweist.

5. Auffangbehälter nach einem der vorherigen Ansprüche,
**dadurch gekennzeichnet, dass** der zentrale Vorsprung (38) von der Wandung (14) gebildet wird.

6. Auffangbehälter nach einem der vorherigen Ansprüche,
**dadurch gekennzeichnet, dass** die Wandung (14) einen Bodenbereich (56) und einen Seitenbereich (58) bildet, wobei die Wandung (12) im Seitenbereich (58) in etwa senkrecht zum Bodenbereich (56) verläuft.

7. Auffangbehälter nach Anspruch 6,
**dadurch gekennzeichnet, dass** der Auffangbehälter (12) eine Anzahl von im Bodenbereich (56) angeordnete Entwässerungsöffnungen (50) aufweist.

8. Aufgussvorrichtung zum Zubereiten von Getränken, umfassend
- einen Container (20) mit einem offenen Ende (22) und einem geschlossenen Ende (24) zum Aufnehmen eines Getränks und von unlöslichem Material (37),
- eine Kolben-Filteranordnung (26), die über das offene Ende (22) in den Container (20) einbringbar und zum geschlossenen Ende (24) hin bewegbar ist, und
- einen in den Container (20) einbringbaren Auffangbehälter (12) nach einem der vorherigen Ansprüche, der mit der Kolben-Filteranordnung (26) kuppelbar ist, wobei im gekuppelten Zustand ein Abstand (X) zwischen dem Rand (18) des Auffangbehälters (12) und der Kolben-Filteranordnung (26) gebildet wird.

9. Aufgussvorrichtung nach Anspruch 8,
**dadurch gekennzeichnet, dass** der Abstand (X) zwischen dem Rand (18) und der Kolben-Filteranordnung (26) zwischen 3 und 10 mm, insbesondere zwischen 3 und 6 mm beträgt.

10. Aufgussvorrichtung nach einem der Ansprüche 8 oder 9,
**dadurch gekennzeichnet, dass** das erste Kupplungselement (40) und das zweite Kupplungselement (42) im gekuppelten Zustand miteinander zusammenwirkende Formschlussmittel (44) umfassen.

11. Aufgussvorrichtung nach Anspruch 10,
**dadurch gekennzeichnet, dass** das erste Kupplungselement (40) oder das zweite Kupplungselement (42) einen im Wesentlichen kugelförmigen oder zylinderförmigen Abschnitt (46) umfasst, der im gekuppelten Zustand von Rastarmen (48) des jeweils anderen Kupplungselements (40, 42) umgriffen wird.

## Claims

1. Collecting container (12) for collecting insoluble material (37), which is used in the preparation of beverages by means of an infusion device (10), wherein the infusion device (10) comprises
- a vessel (20) having an open end (22) and a closed end (24) for receiving the beverage and the insoluble material (37), and
- a piston-filter assembly (26) insertable into the vessel (20) via the open end (22) and movable toward the closed end (24),
wherein the collecting container (12)
- can be placed in the vessel (20),
- comprises a wall (14) which forms an opening (16) surrounded by an edge (18), and
- comprises at least one first coupling element (40) which can be coupled to at least one second coupling element (42) of the piston filter arrangement (26) in such a way that, in the coupled state, a distance (X) is formed between the edge (18) of the collecting container (12) and the piston filter arrangement (26), for which purpose the first coupling element (40) is arranged on a central projection (38) of the collecting container (12) and the central projection (38) projects beyond the edge (18),
**characterized in that**
- the central projection (38) encloses a cavity (39),
- the first coupling element (40) comprises a coupling opening (52) which opens into the cavity (39) at a free end (41) of the central projection (38), and
- the coupling opening (52) tapers conically when viewed from the free end (41).

2. Collecting container according to claim 1,
**characterized in that** the central projection (38) has a first height (H1) and the collecting container (12) in the edge (18) has a second height (H2) and the central projection (38) projects beyond the edge (18) with a height difference (H) between 1 mm and 8 mm and in particular between 2 mm and 6 mm.

3. Collecting container according to one of the previous claims,
**characterized in that** the collecting container (12) has a diameter (DA) and the ratio of the height difference (ΔH) to the diameter (DA) is between 0,01 and 0,07.

4. Collecting container according to one of the previous claims,
**characterized in that** the central projection (38) has at least one recess (54) extending from the free end (41) and penetrating the wall (14).

5. Collecting container according to one of the previous claims,
**characterized in that** the central projection (38) is formed by the wall (14).

6. Collecting container according to one of the previous claims,
**characterized in that** the wall (14) forms a bottom region (56) and a side region (58), the wall (12) in the side region (58) extending approximately perpendicularly to the bottom region (56).

7. Collecting container according to claim 6,
**characterized in that** the collecting container (12) has a number of drainage openings (50) arranged in the bottom region (56).

8. Infusion apparatus for preparing beverages, comprising
- a vessel (20) having an open end (22) and a closed end (24) for receiving a beverage and insoluble material (37),
- a piston-filter arrangement (26) which can be introduced into the vessel (20) via the open end (22) and movable towards the closed end (24), and
- a collecting container (12) according to one of the previous claims which can be introduced into the vessel (20), and which can be coupled to the piston-filter arrangement (26), wherein a distance (X) being formed between the edge (18) of the collecting container (12) and the piston filter arrangement (26) in the coupled state.

9. Infusion device according to claim 8,
**characterized in that** the distance (X) between the edge (18) and the piston-filter arrangement (26) is between 3 and 10 mm, in particular between 3 and 6 mm.

10. Infusion device according to one of the claims 8 or 9,
**characterized in that** the first coupling member (40) and the second coupling member (42) comprise form closure means (44) cooperating in the coupled state.

11. Infusion device according to claim 10,
**characterized in that** the first coupling element (40) or the second coupling element (42) comprises a substantially spherical or cylindrical portion (46) which, in the coupled state, is encompassed by latching arms (48) of the respective other coupling element (40, 42).

## Revendications

1. Récipient collecteur (12) pour la collecte de matière insoluble (37) utilisée lors de la préparation de boissons à l'aide d'un dispositif d'infusion (10), selon lequel le dispositif d'infusion (10) comprend
- un conteneur (20) avec une extrémité ouverte (22) et une extrémité fermée (24) pour la réception de la boisson et de la matière insoluble (37), et
- un ensemble filtre-piston (26) qui peut être introduit par l'extrémité ouverte (22) dans le conteneur (20) et qui peut être déplacé en direction de l'extrémité fermée (24),
selon lequel le récipient collecteur (12)
- peut être introduit dans le conteneur (20),
- comprend une paroi (14) formant une ouverture (16) entourée d'un bord (18) et
- au moins un premier élément de couplage (40) qui peut être couplé à au moins un second élément de couplage (42) de l'ensemble filtre-piston (26) de manière à ce que, à l'état couplé, un espace (X) soit créé entre le bord (18) du récipient collecteur (12) et l'ensemble filtre-piston (26), ce pour quoi le premier élément de couplage (40) est disposé sur une saillie centrale (38) du récipient collecteur (12) et la saillie centrale (38) dépasse du bord (38),
**caractérisé en ce que**
- la saillie centrale (38) entoure une cavité (39),
- le premier élément de couplage (40) comprend une ouverture de couplage (52) qui aboutit dans la cavité (39) au niveau d'une extrémité libre (41) de la saillie centrale (38), et
- l'ouverture de couplage (52) se rétrécit de manière conique à partir de l'extrémité libre (41).

2. Récipient collecteur selon la revendication 1,
**caractérisé en ce que** la saillie centrale (38) possède une première hauteur (H1) et le récipient collecteur (12) au niveau du bord (18) possède une seconde hauteur (H2) et la saillie centrale (38) dépasse du bord (18) d'une différence de hauteur (ΔH) comprise entre 1 mm et 8 mm et en particulier entre 2 mm et 6 mm.

3. Récipient collecteur selon l'une des revendications précédentes,
**caractérisé en ce que** le récipient collecteur (12) possède un diamètre (DA) et le rapport entre la différence de hauteur (ΔH) et le diamètre (DA) est de 0,01 à 0,07.

4. Récipient collecteur selon l'une des revendications précédentes,
**caractérisé en ce que** la saillie centrale (38) comprend au moins un évidement qui part de l'extrémité libre (41) et pénètre dans la paroi (14).

5. Récipient collecteur selon l'une des revendications précédentes,
**caractérisé en ce que** la saillie centrale (38) est formée de la paroi (14).

6. Récipient collecteur selon l'une des revendications précédentes,
**caractérisé en ce que** la paroi (14) forme une zone de fond (56) et une zone latérale (58), la paroi (12) dans la zone latérale (58) étant sensiblement perpendiculaire à la zone de fond (56).

7. Récipient collecteur selon la revendication 6,
**caractérisé en ce que** le récipient collecteur (12) comprend une pluralité d'ouvertures de drainage (50) disposées dans la zone de fond (56).

8. Dispositif d'infusion (10) pour la préparation de boissons, comprenant
- un conteneur (20) avec une extrémité ouverte (22) et une extrémité fermée (24) pour la réception d'une boisson et de matière insoluble (37),
- un ensemble filtre-piston (26) qui peut être introduit par l'extrémité ouverte (22) dans le conteneur (20) et qui peut être déplacé en direction de l'extrémité fermée (24), et
- un récipient collecteur (12) selon l'une des revendications précédentes qui peut être introduit dans le conteneur (20) et qui peut être couplé à l'ensemble filtre-piston (26), un espace (X) étant formé à l'état couplé entre le bord (18) du récipient collecteur (12) et l'ensemble filtre-piston (26).

9. Dispositif d'infusion selon la revendication 8,
**caractérisé en ce que** l'espace (X) entre le bord (18) et l'ensemble filtre-piston (26) est compris entre 3 et 10 mm, en particulier entre 3 et 6 mm.

10. Dispositif d'infusion selon l'une des revendications 8 ou 9,
**caractérisé en ce que** le premier élément de couplage (40) et le second élément de couplage (42) comprennent à l'état couplé des moyens de complémentarité de forme (44) coopérant l'un avec l'autre.

11. Dispositif d'infusion selon la revendication 10,
**caractérisé en ce que** le premier élément de couplage (40) ou le second élément de couplage (42) comprend une partie (46) essentiellement sphérique ou cylindrique qui est enserrée à l'état couplé par des bras d'encliquetage (48) de l'autre élément de couplage correspondant (40, 42).
